Europäisches Patentamt

European Patent Office

Office européen des brevets

(19)

(11) Numéro de publication: **0 317 931 B1**

# (12) FASCICULE DE BREVET EUROPEEN

(45) Date de publication de fascicule du brevet: **30.09.92**  (51) Int. Cl.5: **H04L 12/54**, H04L 12/58

(21) Numéro de dépôt: **88119336.1**

(22) Date de dépôt: **21.11.88**

(54) **Unité de gestion pour élément de commutation de donnees transmises par multiplexage temporel asynchrone.**

(30) Priorité: **27.11.87 FR 8716476**

(43) Date de publication de la demande:
**31.05.89 Bulletin 89/22**

(45) Mention de la délivrance du brevet:
**30.09.92 Bulletin 92/40**

(84) Etats contractants désignés:
**AT BE CH DE ES FR GB IT LI NL SE**

(56) Documents cités:
**EP-A- 0 113 639**
**WO-A-87/02207**
**FR-A- 2 526 613**
**US-A- 3 979 733**

**L'ECHO DES RECHERCHES, no. 115, 1er trimestre 1984, pages 33-40, Issy-Les-Moulineaux, FR; M. SERVEL et al.: "Réseaux de transfert en vidéocommunication - La commutation de paquets"**

(73) Titulaire: **ALCATEL CIT**
**12 Rue de la Baume**
**F-75008 Paris(FR)**

(72) Inventeur: **Bakka, Raymond**
**15 Route des Gardes**
**F-92190 Meudon(FR)**

(74) Mandataire: **Weinmiller, Jürgen et al**
**Lennéstrasse 9 Postfach 24**
**W-8133 Feldafing(DE)**

## Description

La présente invention concerne une unité de gestion pour un élément de commutation de données transmises par multiplexage temporel asynchrone, appelé aussi matrice de commutation temporelle asynchrone en mode ATD (pour Asynchronous Time division). Le terme "données" doit ici se comprendre dans son acception la plus large et recouvre les informations de parole, d'image et toutes sortes de données, au sens usuel, à transmettre et commuter dans le cadre du réseau numérique à intégration de services (RNIS).

Dans la transmission temporelle asynchrone, telle qu'elle est ici entendue, le milieu de transmission d'une liaison de transmission est temporellement divisé en créneaux égaux véhiculant chacun une cellule, c'est-à-dire un groupe comprenant un nombre déterminé d'éléments d'information binaire ou bits, incluant une étiquette comportant une indication de destination et un champ de données contenant l'information de communication proprement dite. Le débit de la liaison de transmission, dans les projets actuels, est de l'ordre de plusieurs centaines de mégabits par seconde.

La commutation consiste à recevoir l'information numérique ainsi structurée de plusieurs liaisons d'entrée et à retransmettre cette information sur plusieurs liaisons de sortie. Plus précisément, une cellule reçue sur l'une des liaisons d'entrée est retransmise sur une des liaisons de sortie, désignée par l'indication de destination incluse dans cette cellule.

Un élément de commutation est un dispositif unitaire accomplissant une telle commutation entre un nombre défini de liaisons d'entrée et un nombre défini de liaisons de sortie. De tels éléments de commutation peuvent être assemblés en un réseau de commutation à plusieurs étages. Dans ce cas, l'indication de destination devra pourvoir aux besoins de chacun des éléments de commutation traversés.

Au niveau d'un élément de commutation et dans un état de commutation stationnaire, les cellules parvenant d'une liaison d'entrée et qui sont destinées à une même liaison de sortie constituent un flux de données dont le débit moyen est constant, mais dont le débit instantané est sujet à des fluctuations que l'on peut considérer comme aléatoires. Les cellules retransmises sur une liaison de sortie proviennent de plusieurs liaisons d'entrée et représentent l'addition de plusieurs flux indépendants. Les moyens de commande du réseau doivent être tels que le débit moyen correspondant à cette addition soit au plus égal à la capacité de transmission de la liaison de sortie, pour éviter tout engorgement. Mais, pour des raisons d'efficacité, ce débit total moyen doit pouvoir être aussi proche que possible de la capacité de transmission nominale de la liaison. Cela entraîne que l'addition des débits instantanés dépassera de temps à autre la capacité de transmission de la liaison de sortie. En dehors de ces périodes de pointe, cette capacité ne sera pas pleinement employée.

Au sein d'un élément de commutation, les considérations qui précèdent conduisent à ce que soit prévue une mémoire tampon recevant les cellules provenant des liaisons d'entrée et les conservant jusqu'à ce qu'elles puissent être retransmises sur les liaisons de sortie.

Un élément de commutation répondant au besoin que l'on vient de définir fait l'objet du brevet français n° 2 538 976. On y décrit un élément de commutation de données transmises par multiplexage temporel asynchrone comprenant des circuits de réception associés chacun à une liaison d'entrée et fournissant des cellules reçues par cette liaison d'entrée, des circuits d'émission associés chacun à une liaison de sortie et envoyant des cellules retransmises sur cette liaison de sortie, une mémoire tampon enregistrant des cellules reçues fournies par les circuits de réception et délivrant des cellules à retransmettre aux circuits d'émission, ainsi qu'un dispositif d'adressage de la mémoire tampon comprenant une source d'adresses d'enregistrement et une source d'adresses de lecture.

En réception, les cellules reçues apparaissent sur un bus d'entrée conduisant à la mémoire tampon dans laquelle les cellules reçues des différentes liaisons d'entrée sont cycliquement enregistrées. Parallèlement, l'étiquette de chaque cellule est analysée, au moyen d'une mémoire de commande, et fournit l'adresse de la liaison de sortie à laquelle la cellule est destinée. Cette adresse désigne une mémoire du type "premier entré - premier sorti", appelée couramment FIFO (pour First In - First Out), associée à cette liaison de sortie. Elle permet d'y inscrire l'adresse de l'emplacement de mémoire tampon dans lequel a été enregistrée la cellule considérée. La FIFO de sortie de chaque liaison de sortie indique ainsi où doivent être lues dans la mémoire tampon les cellules à retransmettre sur cette liaison de sortie.

A l'émission, les FIFO de sortie sont cycliquement interrogées. Chacune d'elles fournit, si elle n'est pas vide, l'adresse de l'emplacement de la mémoire tampon dans lequel attend la cellule la plus anciennement reçue qui doive être retransmise sur la liaison de sortie associée. La mémoire tampon fait l'objet d'une opération de lecture à cette adresse. La cellule lue est fournie sur un bus de sortie et atteint un circuit d'émission, par lequel elle sera transmise sur la liaison de sortie.

La demande de brevet déposée ce jour par la Demanderesse et ayant pour titre "Elément de commutation de données transmises par multiplexage temporel asynchrone", vise à améliorer l'efficacité d'emploi de la mémoire tampon, dans un élément de commutation du type que l'on vient de décrire, ce qui permettra soit d'en réduire les dimensions, soit d'augmenter les performances de l'élément de commutation.

Cette invention part de ce que, parmi les cellules transmises sur une liaison de sortie, qui est aussi une liaison d'entrée dans un étage de commutation suivant, il est des cellules non retransmissibles, c'est-à-dire des cellules qui doivent ou peuvent ne pas être retransmises. Les plus nombreuses de celles-ci sont des cellules "vides". En effet, on a vu qu'en dehors des périodes de pointe, la capacité de transmission nominale d'une liaison de sortie n'est pas atteinte par la somme des flux de données qui lui sont soumis. Il existe donc des cellules pour lesquelles, au départ, aucune information de communication n'est disponible. Ces cellules sont alors remplies d'une configuration de bits qui a très peu de chances d'être reproduite par une cellule de communication. La transmission de telles cellules vides offre par ailleurs l'intérêt de permettre la synchronisation du circuit de réception en ce qui concerne le découpage temporel en créneaux.

Il est donc proposé que l'élément de commutation comprenne un circuit d'inhibition d'enregistrement conditionné par le contenu d'une cellule reçue ou l'absence de cellule reçue et fournissant un signal d'inhibition et que la source d'adresses comprenne un accès d'inhibition influencé par ledit signal d'inhibition, de telle sorte qu'aucun emplacement de mémoire ne soit alors occupé dans la mémoire tampon.

La source d'adresse peut être un compteur fournissant les adresses successives d'enregistrement dans la mémoire tampon et le circuit d'inhibition empêchera la progression du compteur, évitant l'emploi d'un emplacement d'enregistrement dans la mémoire tampon.

La source d'adresse peut comprendre une mémoire d'adresses d'emplacements de mémoire tampon libérés par des cellules déjà retransmises. Ledit signal d'inhibition empêchera alors la lecture d'une adresse dans cette mémoire d'adresses. Cette dernière sera avantageusement une FIFO.

L'identification des cellules ne devant pas être retransmises proviendra, notamment, d'un circuit de décodage de la partie adresse de l'étiquette. Elle pourra aussi être effectuée par le circuit de réception lorsqu'il n'aura pas de cellule de communication à fournir, soit qu'il ait reçu une cellule vide, soit qu'une cellule reçue ne soit pas prête au moment où il doit en fournir une, soit encore que le circuit de réception ne soit pas en état de fonctionnement normal, désynchronisé ou hors service par exemple.

Ces dispositions s'appliqueront, par ailleurs, que l'acheminement soit du type auto-directeur, l'étiquette de chaque cellule à acheminer comprenant des indications de destination pour chacun des éléments de commutation à traverser, ou qu'il soit du type à circuit virtuel, l'indication de destination contenue dans l'étiquette de chaque cellule à acheminer devant faire l'objet d'une traduction dans chaque élément de commutation traversé.

La présente invention vise à doter un élément de commutation de données transmises par multiplexage temporel asynchrone du type décrit dans les deux documents mentionnés d'une unité de gestion apte à communiquer avec les liaisons d'entrée et les liaisons de sortie de l'élément de commutation, même si l'élément de commutation est défaillant.

Une telle unité de gestion, d'une manière générale, est un dispositif logique collectant des informations dans l'élément de commutation et en recevant de ses liaisons d'entrée, pour fournir des signaux de commande à l'élément de commutation et des informations sur ses liaisons de sortie.

Un mode de raccordement classique d'une telle unité de gestion est de la connecter à une sortie et à une entrée de l'élément de commutation. On comprend tout de suite que, si l'élément de comutation est défaillant, l'unité de gestion est privée d'accès aux liaisons d'entrée et de sortie de l'élément de commutation. Elle ne peut donc même pas transmettre un message signalant la défaillance. Par ailleurs, l'unité de gestion ne peut avoir de communication avec l'élément de commutation lui-même que par des circuits installés spécifiquement à cet usage et s'étendant dans l'élément de commutation, ce qui implique au minimum un coût additionnel. Ce sera le cas, en particulier, lorsque l'unité de gestion devra fournir des informations relatives au trafic sur les liaisons d'entrée et de sortie de l'élément de commutation.

Par ailleurs, les documents FR-A-2 526 613 et EP-A-0 251 965 décrivent l'un et l'autre un commutateur de paquets (ou de cellules) comprenant une unité de commande connectée au bus d'entrée et au bus de sortie d'une matrice de commutation. Toutefois, dans les deux cas, il s'agit d'une unité de commande intervenant dans le fonctionnement de la matrice de commutation et qui doit recevoir par conséquent toutes les cellules apparaissant sur le bus d'entrée ou qui doit, de son propre chef transmettre des cellules sur le bus de sortie. Dans ces conditions, les circuits d'entrée et de sortie de l'unité de gestion doivent faire face au débit très élevé des cellules sur ces bus, ce qui les rend coûteux ou limite ce débit.

L'invention concerne une unité de gestion qui ne souffre pas d'une telle pénalité.

L'invention a donc pour objet une unité de gestion comprenant des moyens d'entrée agencés pour recevoir des cellules présentes sur le bus d'entrée de l'élément de commutation et des moyens de sortie agencés pour fournir des cellules sur le bus de sortie de l'élément de commutation, dans les deux cas sur commande de l'élément de commutation.

Une unité de gestion ainsi conçue, connectée au bus d'entrée et au bus de sortie de l'élément de commutation, communique ainsi directement avec les circuits de réception des liaisons d'entrée et avec les circuits d'émission des liaisons de sortie, sans être tributaire du bon fonctionnement de l'élément de commutation.

Lesdits moyens d'entrée comprendront de préférence un circuit d'appel décelant un signal d'appel venant de l'élément de commutation et une mémoire d'entrée, le circuit d'appel commandant l'écriture de la cellule présente sur le bus d'entrée de l'élément de commutation, dans la mémoire d'entrée de l'unité de gestion. Cette mémoire d'entrée sera de préférence une FIFO capable d'enregistrer plusieurs cellules.

Lesdits moyens de sortie comprendront de préférence un circuit d'envoi décelant l'absence de cellule à transmettre dans l'élément de commutation et un registre de sortie, le circuit d'envoi fournissant alors la cellule que contient le registre de sortie sur le bus de sortie de l'élément de commutation.

De tels moyens permettront un accès sélectif de l'unité de gestion aux bus d'entrée et de sortie, ce qui réduira la charge de l'unité de gestion.

De plus, selon une caractéristique additionnelle de l'invention, l'unité de gestion comprendra un circuit de forçage empêchant la retransmission d'une cellule dans l'élément de commutation pour permettre l'envoi de la cellule contenue dans le registre de sortie de l'unité de gestion. Celle-ci pourra ainsi bénéficier d'une priorité d'acheminement.

L'unité de gestion comprendra avantageusement un microprocesseur et ses mémoires, ainsi qu'une interface spécialisée contenant notamment la FIFO d'entrée et le registre de sortie, qui accéderont au bus de données du microprocesseur par des moyens de multiplexage et de démultiplexage.

L'unité de gestion comprendra en outre des moyens d'accès, en écriture et lecture, à une mémoire de circuits virtuels de l'élément de commutation.

Les différents objets et caractéristiques de l'invention seront exposés dans la description qui va suivre, fournie à titre d'exemple non limitatif, en se reportant aux figures annexées qui représentent :
- la figure 1, le diagramme simplifié de l'ensemble d'un exemple de réalisation d'un élément de commutation pouvant être doté de l'unité de gestion de la présente invention,
- la figure 2, le format d'une cellule,
- la figure 3, des courbes représentant les différents signaux de base de temps utilisés dans l'élément de commutation de la figure 1,
- la figure 4, le diagramme d'une variante de l'élément de commutation de la figure 1,
- la figure 5, le diagramme des circuits d'un exemple de réalisation de l'unité de gestion de l'invention.

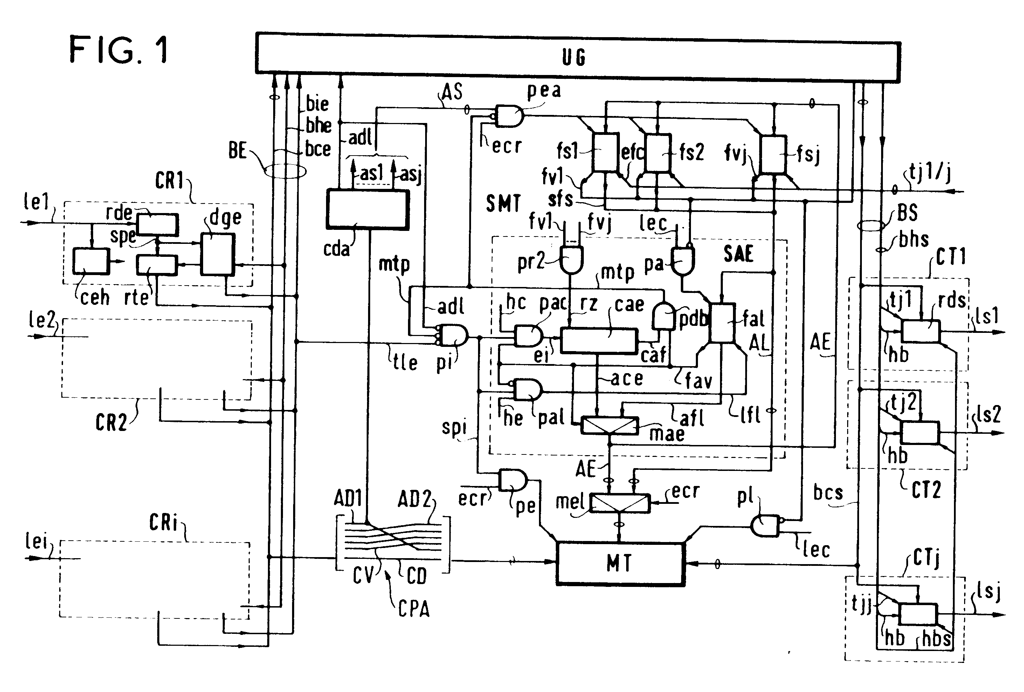

La figure 1 représente le diagramme simplifié de l'ensemble d'un exemple de réalisation d'un élément de commutation pouvant être doté d'une unité de gestion conforme à l'invention. Cet élément de commutation est une matrice de commutation temporelle asynchrone en mode ATD, dans le cas d'un acheminement du type auto-directeur.

Cette matrice comprend i circuits de réception semblables CR1 à Cri à chacun desquels est connectée l'une des i liaisons d'entrée le1 à lei. Le circuit CR1 est partiellement explicité, tandis que les circuits CR2 et CRi ne sont que sommairement indiqués, afin de ne pas surcharger le dessin.

Le circuit de réception CR1 comprend un circuit d'extraction d'horloge ceh qui produit un signal d'horloge synchrone avec les signaux reçus sur la liaison le1 et permet, entre autres, de détecter les signaux numériques présents sur la liaison le1, pour les introduire, en série, dans un registre à décalage d'entrée rde. Ce registre à décalage d'entrée est capable de contenir une cellule de transmission entière et de la fournir en parallèle sur sa sortie spe en direction d'un registre tampon d'entrée rte qui peut être du type FIFO. Le circuit de réception CR1 comprend encore un dispositif de gestion d'entrée dge qui reçoit les cellules fournies en parallèle à la sortie du registre rde, qui commande le registre tampon d'entrée rte et qui, notamment, en permet la lecture. A cette fin, le dispositif de gestion dge est connecté à un bus d'horloge d'entrée bhe qui lui fournit des signaux de commande et à un bus d'information d'entrée bie, sur lequel il fournit des signaux d'information. Le registre tampon d'entrée rte, quant à lui, est connecté à un bus de cellules d'entrée bce.

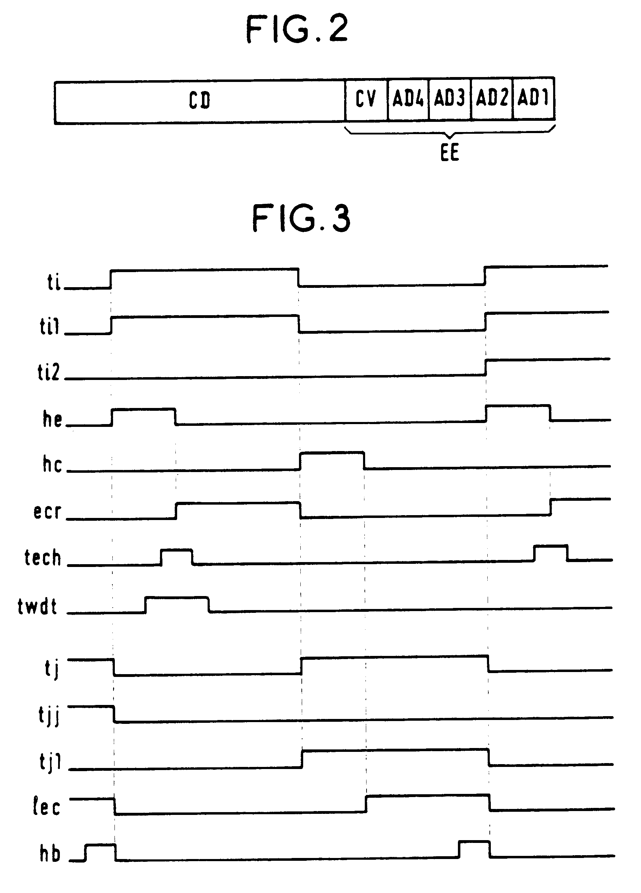

Ces trois bus bhe, bie et bce forment collectivement le bus d'entrée BE. Ce bus BE est temporellement partagé entre les circuits de réception dans un cycle CE dont la durée est au plus celle de la transmission d'une cellule sur les liaisons d'entrée et qui comprend i périodes égales ti, référencées individuellement ti1 à tii (voir figure 3), une pour chacun des circuits de réception CR1 à CRi.

Entre autres fonctions, le dispositif de gestion dge est chargé de reconnaître les périodes dans lesquelles aucune cellule n'est présentée par le circuit de réception CR1 sur le bus bce et de les signaler en tant que telles en appliquant un signal de temps libre sur le conducteur tle du bus ble.

Le système de mémoire tampon SMT reçoit donc, dans chaque période ti, soit une cellule CL reçue d'un circuit de réception CR, soit un signal de temps libre tle.

Le format d'une cellule CL est illustré à la figure 2. La cellule comprend un champ de données CD et une étiquette EE comprenant, à titre d'exemple seulement, quatre adresses AD1 à AD4 et un numéro d'affectation CV. Le champ de données peut comprendre 32 octets. La première adresse AD1 est celle qui doit servir d'indication de destination à la matrice considérée. Les adresses suivantes doivent servir dans des matrices que devra traverser ultérieurement la cellule considérée. Le numéro d'affectation CV a un rôle similaire vis-à-vis de l'équipement terminal du réseau qui, ultimement, recevra la cellule et devra l'acheminer. Comme les matrices d'un réseau sont toutes semblables, chacune d'elle doit recevoir une indication de destination donnée par la première adresse de l'étiquette EE de la cellule qu'elle reçoit. Pour qu'il en soit ainsi, la présente matrice comprend un câblage de permutation d'adresses CPA, entre le bus bce et la mémoire tampon MT, grâce auquel l'adresse AD1 passe en dernière position dans l'étiquette EE, alors que les adresses AD2 à AD4 et CV avancent d'une position. Donc, après retransmission de la cellule, l'adresse AD2 sera l'adresse AD1 pour une matrice de l'étage suivant d'un réseau de matrices telles que celle de la figure 1.

Comme on le voit à la figure 1, l'adresse AD1 est transmise à un circuit de décodage d'adresse cda. Celui-ci fournit en réponse un signal sur l'un de j conducteurs d'adresse de sortie AS individuellement référencés as1 à asj, si la cellule doit être retransmise, et cela identifie alors la liaison de sortie sur laquelle il faut la retransmettre. Dans le cas d'une cellule qui ne doit pas être retransmise, par exemple dans le cas d'une cellule destinée à l'unité de gestion UG de la présente matrice, le circuit de décodage fournit à la place, un signal sur le conducteur adl.

On considèrera, dans un premier temps, que la cellule CL reçue est une cellule de communication devant être retransmise sur l'une des liaisons de sortie ls1 à lsj. Le circuit de décodage d'adresse cda fournit donc un signal sur le conducteur asj, par exemple. Il ne fournit pas le signal adl. Par ailleurs, le signal tle est également absent.

On va aussi supposer qu'un signal mtp est absent, ce qui est vrai tant que la mémoire tampon est en mesure d'enregistrer une cellule d'entrée, comme on le verra par la suite.

Il convient de signaler, à ce point, que d'une manière générale, dans le présent texte, on désignera souvent, pour simplifier, par la même référence un conducteur et le signal qu'il véhicule.

Il résulte de ce qui a été exposé plus haut que la porte d'inhibition pi, de type NON-ET (NAND), fournit un signal spi validant les portes pal et pac déterminant l'obtention d'une nouvelle adresse d'enregistrement d'une source d'adresses d'enregistrement SAE. Cette source d'adresses d'enregistrement SAE comprend essentiellement une mémoire d'adresses fal, avantageusement de type FIFO, contenant les adresses d'emplacements d'enregistrement dans la mémoire tampon MT qui viennent d'être libérés après usage, ainsi qu'un compteur d'adresses cae ayant autant de positions utiles que la mémoire tampon comprend d'emplacements de mémoire et qui progresse d'une position à l'autre jusqu'à ce qu'il atteigne une position d'arrêt dans laquelle il fournit un signal caf ; cela sera explicité plus loin.

Tant qu'une adresse au moins est enregistrée dans la FIFO fal, une sortie de cette FIFO fournit un signal de niveau nul sur un conducteur fav, ce qui tend à valider la porte pal et bloque une porte pdb, laquelle fournit alors un signal nul débloquant la porte pi et la porte pea.

Ainsi, dans l'intervalle de temps d'obtention d'adresse caractérisé par un signal he situé au début de la période ti (voir figure 3), la porte pal conduit et fournit un signal lfl appliqué à la FIFO fal et provoquant dans celle ci une opération de lecture qui délivre l'adresse d'un emplacement libre de la mémoire tampon MT sur les conducteurs afl. Cette adresse atteint un multiplexeur mae, alors que celui-ci reçoit aussi le signal de niveau nul présent sur le conducteur fav. En réponse, le multiplexeur mae fournit l'adresse AE.

L'intervalle de temps d'écriture dans la mémoire tampon MT est caractérisé par un signal ecr situé à la fin de la période ti (voir figure 3) et appliqué à un multiplexeur d'adresses d'écriture/lecture mel, pour l'orienter vers la source d'adresses d'enregistrement SAE ; l'adresse AE est ainsi fournie à la mémoire tampon MT.

Au même instant, la porte de commande d'écriture pe, également validée par le signal de sortie spi de la porte pi, transmet le signal ecr à la mémoire tampon MT, dans laquelle, en réponse, s'effectue une opération d'écriture. La cellule présente sur le bus BE, telle que modifiée par le câblage de permutation CPA, est écrite dans un emplacement libre désigné par l'adresse AE.

Par ailleurs, le même signal d'écriture ecr valide des portes pea, de sorte que celle qui reçoit le signal asj du circuit de décodage cda, fournit un signal de commande d'écriture à l'une de j FIFO de sortie, fs1 à fsj, associées chacune, respectivement, à l'une des liaisons de sortie ls1 à lsj. Ainsi, celle des FIFO qui correspond à la liaison de sortie à laquelle est destinée la cellule reçue, reçoit-elle l'adresse AE de l'emplacement où la cellule est enregistrée dans la mémoire tampon MT, appliquée à l'entrée de toutes les FIFO fs1 à fsj ; elle l'enregistre, en vue de la retransmission ultérieure de la cellule considérée sur la liaison de sortie correspondante.

Le processus que l'on vient de décrire se reproduit à chaque période ti, pour des circuits de réception successifs, tant que ceux-ci fournissent des cellules CL devant être retransmises et tant que la FIFO fal contient au moins une adresse d'emplacement de mémoire tampon disponible.

S'il advient que la FIFO fal ne contienne plus d'adresse, le signal fav change de niveau, bloque la porte pal et ouvre la porte pac. On supposera qu'alors le compteur d'adresses cae n'a pas atteint la position d'arrêt dans laquelle il fournit le signal caf. De ce fait, la porte pdb fournit un signal mtp de niveau nul, comme auparavant.

Le signal fav au niveau haut commute le multiplexeur mae vers la sortie ace du compteur cae. C'est donc l'adresse fournie par le compteur cae qui sera utilisée, à la place de l'adresse fournie par la FIFO fal, pour constituer l'adresse AE. Comme dans le cas précédent, cette adresse est utilisée pour l'enregistrement dans la mémoire tampon MT de la cellule incidente. Elle est d'autre part inscrite dans la FIFO de sortie fs1 à fsj correspondant à la liaison de sortie à laquelle cette cellule est destinée.

Ensuite, un signal hc est retransmis par la porte pac sur une entrée d'indexation ei du compteur d'adresse d'écriture cae qui avance d'un pas et fournit une adresse augmentée d'une unité sur sa sortie ace, en prévision de l'enregistrement de la cellule suivante, à moins qu'il n'atteigne sa position d'arrêt.

On vient donc de voir comment les cellules de communication, qui doivent être retransmises, sont enregistrées dans la mémoire tampon, tandis que les adresses des emplacements de mémoire qui les contiennent sont inscrites dans des FIFO de sortie.

Il faut encore considérer le cas où aucune adresse n'est disponible pour l'enregistrement dans la mémoire tampon. C'est le cas où la FIFO fal fournit le signal fav, tandis que le compteur cae fournit le signal caf. La porte pdb fournit en réponse le signal mtp, lequel bloque la porte pi et les portes pea. De la sorte, une cellule incidente qui ne peut pas être enregistrée dans la mémoire tampon est traitée comme une cellule vide. Son contenu est perdu, ce qui est inévitable, mais elle ne perturbe pas les opérations en cours.

On doit prévoir des moyens pour que le compteur cae quitte de temps à autres sa position d'arrêt. Cela peut se faire, par exemple, comme illustré à la figure 1, à l'aide d'une porte prz, de type ET, qui fournit un signal rz lorsque toutes les FIFO de sortie sont vides et fournissent respectivement les signaux fv1...,fvj. Ce signal réinitialise le compteur cae, après quoi il fournira les adresses successives de tous les emplacements de la mémoire tampon MT, au fur et à mesure des besoins, comme décrit précédemment. Le même signal peut également réinitialiser la FIFO fal ou, par tout autre moyen, faire que les adresses qu'elle contient ne soient pas utilisées.

On va maintenant considérer le cas d'une cellule qui ne doit pas être retransmise. Ce cas sera d'abord illustré par la réception d'une cellule destinée à l'unité de gestion UG. Cette cellule porte une adresse AD1 qui, décodée par le circuit de décodage cda, donne lieu à l'application d'un signal sur le conducteur adl, aucun signal n'étant par contre fourni sur les conducteurs AS.

Le bus BE est prolongé jusqu'à l'unité de gestion UG. Le conducteur adl est également prolongé jusqu'à l'unité de gestion UG. Le signal de décodage appliqué sur ce conducteur invitera donc l'unité de gestion UG à prendre connaissance de l'information présente sur le bus BE. On obtiendra ainsi l'avantage que l'unité de gestion UG ne sera appelée à connaître que les cellules qui lui sont destinées, ce qui réduira sa charge au minimum.

Un deuxième cas, en fait similaire un précédent, est celui qui résulte de la réception d'une cellule "vide" par un circuit de réception CR. Par exemple, la matrice d'un étage de commutation existant en amont de la présente matrice n'a aucune information à transmettre dans une cellule à transmettre sur la liaison le1 jusqu'au circuit de réception CR1. Elle envoie donc une cellule vide, comme indiqué dans le préambule de cette description. La cellule vide est identifiée par le dispositif de gestion dge, au moment où elle est affichée sur la sortie spe du registre rde. Cette cellule n'est alors pas transférée dans le registre tampon d'entrée rte. Il en résulte un peu plus tard, durant une période du bus BE affectée à la liaison le1, que le registre rte est vide ; aucune cellule n'est fournie sur le bus bce, et le dispositif de gestion dge délivre un signal tle sur le bus bie. L'unité de gestion UG, recevant ce signal, sera informé du fait.

Dans les deux cas typiques que l'on vient d'évoquer, il n'y a pas lieu de préparer la retransmission d'une cellule reçue. On a donc prévu des mesures permettant de ne pas occuper - inutilement - un emplacement dans la mémoire tampon MT. Dans la pratique, selon la conformation des circuits d'adressage de la mémoire tampon, divers moyens peuvent permettre d'atteindre le résultat. Le plus simple, et c'est celui du présent exemple de réalisation, consiste à inhiber les opérations relatives à l'écriture d'une cellule dans la mémoire tampon.

A cette fin, la porte pi est bloquée par l'un ou l'autre des signaux adl et tle et elle fournit un signal d'inhibition spi, sur les accès d'inhibition des portes pac et pal, tel que ces deux portes sont bloquées. Du fait que ces portes restent bloquées, d'une part, la FIFO fal ne pourra pas être lue, et le compteur cae ne pourra pas progresser. D'autre part, le signal d'inhibition spi bloque également la porte pe, de sorte que l'opération d'écriture n'aura pas lieu dans la mémoire tampon MT. De plus, le circuit de décodage d'adresse cda ne fournissant aucun signal sur les conducteurs AS, aucune adresse AE ne sera enregistrée dans les FIFO de sortie fs1 à fsj.

On évite ainsi d'occuper un emplacement de la mémoire tampon MT, pour augmenter l'efficacité de l'élément de commutation (à volume de mémoire inchangé par rapport aux solutions antérieures) ou pour permettre une réduction du volume de la mémoire tampon (à performances égales).

Par ailleurs, comme aucune adresse n'est inscrite dans les FIFO de sortie, cela entraînera, avec plus ou moins de retard, l'envoi d'une cellule vide, comme on le verra plus loin.

On va maintenant considérer comment les cellules enregistrées sont retransmises sur les liaisons de sortie.

Chacune des liaisons de sortie ls1 à lsj est équipée d'un circuit de sortie CT1 à CTj qui se résume en un registre de conversion parallèle-série rds. Ces circuits de sortie CT sont connectés à un bus BS, temporellement partagé entre tous les circuits de sortie, dans un cycle CS dont la durée est celle de la transmission d'une cellule sur les liaisons de sortie et qui comprend j périodes égales tj, individuellement référencées tj1 à tjj (figure 3). Ce bus BS, semblable au bus d'entrée BE, comprend un bus de cellules de sortie bcs et un bus d'horloge de sortie bhs. Au cours d'une période, définie par un signal tj1 à tjj qui lui est propre, un circuit de sortie CT1, par exemple, charge dans son registre rds la cellule alors présente sur le bus bcs, sous l'effet du signal d'horloge hs (voir figure 3). Dès cet instant, en réponse à des impulsions d'horloge hbs, la cellule entière est transférée en série du registre rds sur la liaison ls1. Il en va de même pour les autres liaisons de sortie.

La fourniture des cellules à chacune des liaisons de sortie s'effectue par lecture de celles-ci dans la mémoire tampon MT, du moins tant qu'il existe des cellules à retransmettre.

Au début d'une période tj, l'une des FIFO de sortie fs1 à fsj, fs1 par exemple, recevant un signal tj1 qui lui est propre, sur son entrée de commande de lecture efc, fournit une adresse de lecture AL.

Compte tenu du mode de fonctionnement d'une FIFO, il s'agit de l'adresse de l'emplacement contenant la cellule qui attend depuis le plus longtemps, dans la mémoire MT, le moment d'être retransmise sur la liaison ls1. Dans le même temps, la FIFO fs1 fournit un signal de niveau nul sur sa sortie fv1, ce qui signifie qu'elle n'est pas vide. Appliqué à une entrée inverseuse de la porte de lecture pl, ce signal permet la transmission d'un signal de commande de lecture lec à la mémoire tampon pour y commander l'exécution d'une opération de lecture. L'adresse AL, pour cette opération, est celle que fournit la FIFO fs1 sur sa sortie sfs, le multiplexeur d'adresse d'écriture/lecture mel étant orienté vers cette sortie du fait de l'absence du signal ecr. La cellule ainsi lue est transmise par la mémoire tampon MT sur le bus bcs. De là, sous l'effet d'un signal d'horloge hs, elle est inscrite dans le registre rds du circuit de transmission CT1.

Simultanément, l'adresse AL fournie par la FIFO de sortie fs1 sur sa sortie sfs est fournie à l'entrée de la FIFO fal qui reçoit par ailleurs un signal de commande d'écriture en provenance de la porte pa validée par le niveau nul sur le conducteur fv1 et conduisant de ce fait le signal lec. Cette adresse, correspondant à un emplacement en cours de lecture, donc en voie d'être libéré, dans la mémoire tampon MT, est ainsi enregistrée dans la FIFO fal, pour être réutilisée, comme on l'a déjà décrit.

Le processus que l'on vient de décrire se reproduit de manière semblable à chaque période tj, pour les liaisons de sortie successives, tout au moins tant que des cellules à retransmettre sont fournies par la mémoire MT.

On va donc maintenant considérer le cas où il n'existe pas de cellule à retransmettre. En reprenant l'exemple de la liaison ls1 et de sa FIFO de sortie fs1, aucune adresse n'existe plus dans cette FIFO et celle-ci fournit alors un signal fv1 indiquant qu'elle est vide.

Le signal fv1 bloque la porte pl et interdit de ce fait toute opération de lecture dans la mémoire tampon MT. Il bloque aussi la porte pa et empêche toute opération d'écriture dans la FIFO fal. De plus, il est transmis à l'unité de gestion UG pour lui signaler que la matrice de commutation n'a pas de cellule à transmettre sur la liaison de sortie considérée. En retour, par exemple, l'unité de gestion UG fournit sur le bus bcs l'information caractéristique d'une cellule vide.

Le bus BS, tout comme le bus BE, est en effet prolongé jusqu'à l'unité de gestion UG, ce qui lui permet de transmettre des cellules de service sur les liaisons de sortie, s'il n'y a pas de cellule de communication à retransmettre. La cellule vide est ainsi, en quelque sorte, l'une de ces cellules de service.

La cellule vide transmise par l'unité de gestion UG sur le bus bcs est acheminée par le circuit de sortie CT1 sur la liaison de sortie ls1 tout comme une cellule de communication venant de la mémoire tampon MT.

De plus, comme on le verra par la suite, il est également possible à l'unité de gestion de forcer la transmission d'une cellule de service, moyennant quelques moyens additionnels simples.

Les différents signaux de commande à caractère cyclique seront engendrés par une base de temps, comme il est habituel dans cette technique. Leur échelonnement ressort de la description. Ils sont illustrés par la figure 3. Les différents composants du diagramme de la figure 1 sont de type classique.

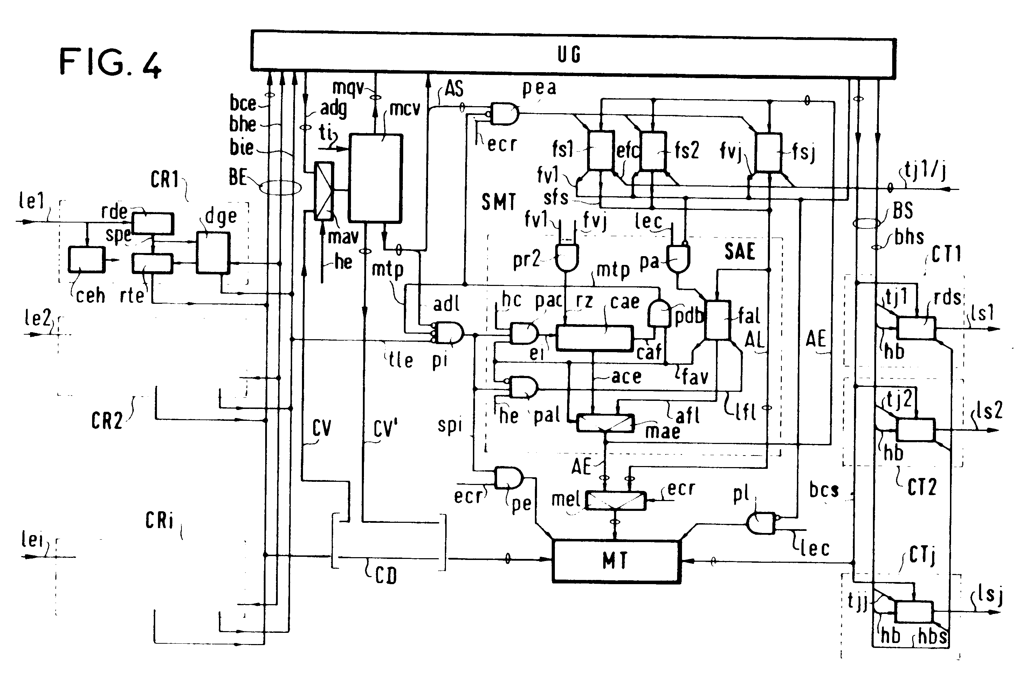

En se tournant vers la figure 4, on va maintenant considérer le cas d'un acheminement par circuit virtuel. Dans ce cas, l'étiquette de chaque cellule, par rapport au format de la figure 2, comprend seulement le numéro de circuit virtuel CV, les adresses étant omises. Comme on peut en juger aisément, le diagramme est le même que celui de la figure 1 et l'on a conservé les mêmes références pour désigner des parties constituantes identiques, à l'exception de ce qui va être maintenant exposé.

Le dispositif de décodage d'adresses est remplacé par une mémoire de circuits virtuels mcv. Celle-ci, lue sous l'effet du signal ti, dans chaque période du bus BE, reçoit alors comme adresse l'indication CV de la cellule reçue, qui lui est transférée par un multiplexeur mav orienté par le signal he. En échange, elle fournit le signal AS, si la cellule doit être retransmise, ou le signal adl, si elle est destinée à l'unité de gestion UG, tout comme le fait le circuit de décodage cda de la figure 1. Le fonctionnement est ensuite inchangé, en ce qui concerne l'acheminement de la cellule reçue.

Par ailleurs, le câblage de permutation CPA n'existe pas, car c'est la mémoire mcv qui fournit une indication de circuit virtuel modifiée CV', à la place de celle qui lui servait d'adresse.

L'unité de gestion accède enfin à la mémoire mcv par des liaisons adg et mqv, pour y effectuer des opérations d'écriture et de lecture. Cela permettra d'y inscrire les informations correspondant à chaque valeur de l'indication CV, dans des emplacements correspondant à ces valeurs, afin que la mémoire mcv se comporte comme une table de traduction.

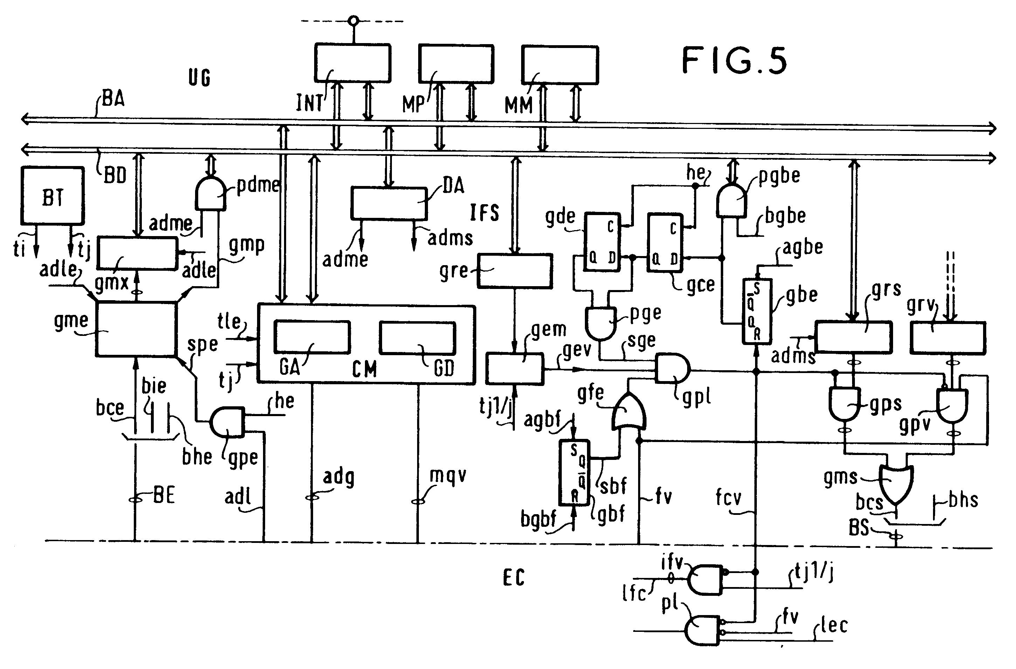

On va maintenant passer, en se reportant à la figure 5, à la description d'un exemple de réalisation d'une unité de gestion conforme à la présente invention.

Cette unité de gestion UG comporte essentiellement un microprocesseur MP, des mémoires MM, une unité d'interface INT, pour accès au microprocesseur depuis l'extérieur, et une unité d'interface spécialisée IFS, interconnectés par un bus de données BD et un bus d'adresses BA. L'unité de gestion UG est connectée à l'élément de commutation de la figure 1 ou 4, illustré en EC. On a également localisé dans l'unité de gestion UG la base de temps BT fournissant les divers signaux périodiques illustrés à la figure 3.

Le bus bce faisant partie du bus BE de l'élément de commutation de la figure 1 ou 4 est connecté à une FIFO gme. Le conducteur adl est connecté à un circuit d'appel constitué par une porte gpe. Ouverte par le signal he, au début d'une période ti (voir figure 3), la porte gpe transmet un signal d'appel fourni sur le conducteur adl par l'élément de commutation et produit le signal de commande d'écriture spe déclenchant l'enregistrement d'une cellule alors présente sur le bus bce, dans la FIFO gme. Ce processus se répète toutes les fois que l'élément de commutation reçoit une cellule destinée à l'unité de gestion UG.

Dès qu'elle contient une cellule au moins, la FIFO gme fournit un signal gmp. Ce signal est périodiquement interrogé par le microprocesseur MP qui fournit sur le bus BA une adresse particulière, reçue par un décodeur d'adresse DA, lequel fournit alors un signal adme ouvrant la porte pdme. Le microprocesseur MP reçoit ainsi, par le bus de données BD, l'information qu'une cellule au moins est en attente dans la FIFO gme. Le microprocesseur MP vient ensuite lire une cellule dans la FIFO gme. Il fournit pour cela de nouvelles adresses, correspondant à des parties successives de la FIFO gme, en échange desquelles le décodeur d'adresse DA fournit des signaux d'adresse représentés collectivement par un signal de commande de lecture adle. Le même signal collectif adle, appliqué à un multiplexeur gmx, permet l'envoi - mot par mot - des parties d'une cellule lue dans la FIFO gme, sur le bus de données BD. Cette cellule est enregistrée et traitée par le microprocesseur MP. Ce processus se répète, tant que la FIFO gme contient une cellule fournie par l'élément de commutation.

Des portes telles que pdme, d'une manière générale, permettent au microprocesseur de prendre connaissance d'états dans l'unité de gestion UG ou l'élément de commutation EC, présents sur des conducteurs particuliers, par exemple pour le contrôle du trafic écoulé ou la surveillance du fonctionnement. On mentionnera en particulier le signal tle (voir figure 1) fourni sur le bus bie, faisant partie du bus BE, qui peut être communiqué ainsi au microprocesseur, pour l'informer de la réception de chaque cellule vide, le signal ti1/tii, au même instant, spécifiant sur quelle liaison d'entrée elle est reçue.

Le bus de sortie BS de l'élément de commutation EC est connecté à la sortie d'une porte multiple de type OU gms dont les deux entrées sont couplées aux sorties de portes multiples de type ET gps et gpv, elles-mêmes respectivement couplées aux sorties de deux registres grs et grv. Chacun de ces registres est prévu pour enregistrer une cellule à transmettre.

On a représenté en fv un conducteur qui correspond à l'ensemble des conducteurs fv1 à fvj de la figure 1 ou 4 sur lesquels les FIFO de sortie fournissent un signal lorsqu'elles ne contiennent pas d'adresse de cellule à retransmettre. Un signal sur le conducteur fv indique donc que la FIFO interrogée durant une période tj est vide. Il est appliqué à une entrée de la porte gpv. En supposant d'abord que celle-ci ne reçoit pas de signal de la porte gpl, elle est alors rendue passante et cela détermine la transmission de la cellule contenue dans le registre grv, sur le bus de sortie BS. Il s'agit d'une cellule vide. Elle peut avoir été inscrite dans le registre grv par des commutateurs manuels, ou y avoir été inscrite par le microprocesseur MP.

Si la porte gpl fournit au contraire un signal de sortie, c'est la porte gps qui est passante et c'est la cellule contenue dans le registre grs qui est transmise. Le registre grs est chargé directement par le microprocesseur MP à partir du bus de données BD, mot par mot, les adresses correspondantes, adms, étant reçues par le bus d'adresse BA et décodées par le décodeur d'adresse DA.

Le même procédé de chargement de registre est utilisé par l'inscription par le microprocesseur MP de l'identité d'une liaison de sortie dans le registre gre. Cette identité est la désignation tj1 à tjj de la période tj affectée à cette liaison de sortie. Un comparateur gcm reçoit par ailleurs les signaux tj1 à tjj fournis par la base de temps BT. Quand il y a identité entre le contenu du registre gre et le signal tj1/j ainsi fourni au comparateur, ce dernier produit un signal gev qui tend à débloquer la porte gpl.

Lorsque le microprocesseur MP doit envoyer une cellule sur une liaison de sortie, il prépare ainsi la cellule dans le registre grs et l'adresse de destination dans le registre gre. Si la transmission de cette cellule n'est pas prioritaire, par rapport au trafic qu'écoule l'élément de commutation EC, le microprocesseur commande alors la transmission de la cellule en activant une bascule gbe. Pour cela, il lui suffit de fournir une adresse correspondante qui, décodée par le décodeur d'adresse DA fournira un signal agbe appliqué sur l'entrée S de la bascule gbe. Préalablement, le microprocesseur MP lira l'état de cette bascule gbe par une porte pgbe validée par une adresse bgbe et connectée à la sortie Q de la bascule gbe, afin de vérifier s'il n'y a pas déjà une cellule en attente d'envoi. Cette même sortie Q est connectée à l'entrée D d'une bascule gce, de type D, dont la sortie Q est elle-même couplée à l'entrée D d'une seconde bascule D, gde. Les entrées C des deux bascules reçoivent le signal he. Elles sont donc activées l'une après l'autre et la porte pge fournit finalement un signal sge qui débloque la porte gpl. Cela se produira lorsque, comme on l'a déjà décrit, le comparateur gem fournira le signal gev, indiquant que, dans le cycle d'adressage des liaisons de sortie, on en est arrivé à celle qui est désignée par le contenu du registre gre et lorsque le signal fv sera fourni par l'élément de commutation EC, indiquant qu'aucune cellule ne doit être retransmise sur la liaison de sortie considérée. Ainsi, la cellule contenue dans le registre grs sera transmise sur le bus bcs, au lieu d'une cellule vide. En outre, le signal de sortie de la porte gpl, couplé à l'entrée R de la bascule gbe, remet celle-ci en position initiale, et les bascules gce et gde reviennent aussi en position initiale, après deux impulsions he.

Mais on peut également souhaiter pouvoir transmettre en priorité des messages urgents. On va décrire ci-après des moyens prévus selon l'invention pour y parvenir, lesquels comprennent, comme on va le voir, une modification minime de l'élément de commutation EC tel qu'il est décrit aux figure 1 et 4.

Si l'envoi de la cellule considéré est prioritaire, le microprocesseur MP, avant d'activer la bascule gbe, active une bascule gbf en fournissant l'adresse agbf.

Dans ce cas, il n'est pas nécessaire d'attendre que l'élément de commutation signale l'absence de cellule à retransmettre sur le conducteur fv. Le signal sbf de la sortie Q de la bascule gbf, par la porte OU gfe, produit le même effet, qui est de débloquer la porte gpl, conjointement avec les signaux gev et sge. La cellule contenue dans le registre grs est ainsi transmise sur le bus BS dès la première période affectée à la liaison de sortie dont l'identité est contenue dans le registre gre. Le signal de sortie de la porte gpl est aussi transmis sur un conducteur fcv, en direction de portes ifv ajoutées dans l'élément de commutation EC et qui permettent, par le signal fcv, de bloquer la transmission des signaux tj1/j sur les entrées de commande de lecture lfc des FIFO de sortie fs1 à fsj. Ce même signal fcv vient bloquer la porte pl, par une entrée additionnelle de celle-ci. On parvient ainsi à empêcher les opérations de lecture dans les FIFO de sortie et la mémoire tampon MT, afin de laisser la place à la transmission de la cellule fournie par l'unité de gestion UG. La réinitialisation de la bascule gbf, par le conducteur bgbf, peut provenir directement du conducteur fcv, tout comme pour la bascule gbe, ou du microprocesseur MP, par une adresse appropriée.

On a enfin représenté à la figure 5 un dispositif CM, connecté aux bus BA et BD, et comprenant notamment un registre d'adresse GA et un registre de données GD. Ce dispositif CM est connecté, par les liaisons adg et mqv, à la mémoire de circuits virtuels incluse dans l'élément de commutation de la figure 4. Il sert à lire et à inscrire dans cette mémoire, de façon classique, les informations relatives aux circuits virtuels, telles que définies précédemment. On n'en donnera pas une description détaillée, puisque sa réalisation dépend du type de mémoire utilisé pour la mémoire de circuits virtuels. On mentionnera toutefois que le fonctionnement du dispositif CM peut être conditionné par les signaux tle et tj qui lui sont fournis, afin qu'il ait lieu dans les périodes où aucune cellule reçue n'est fournie à l'élément de commutation EC ou dans les périodes de temps réservées aux opérations d'émission, afin que les changements du contenu de la mémoire de circuits virtuels n'interfèrent pas avec l'utilisation normale de cette mémoire dans l'acheminement des cellules reçues. Le registre d'adresse GA sert à recevoir, fournie par le microprocesseur, l'adresse dans la mémoire de circuits virtuels, où le microprocesseur doit lire ou inscrire des données d'acheminement ; celles-ci transitent par le registre GD.

L'unité de gestion que l'on vient de décrire, connectée aux bus d'entrée BE et de sortie BS, communique en fait directement avec les circuits d'entrée et les circuits de sortie de l'élément de commutation. Elle n'est pas tributaire du bon fonctionnement des circuits de commutation de l'élément de commutation. Elle reçoit des cellules qui lui sont adressées, prélevées dès leur apparition sur le bus BE, sous réserve qu'une sortie adl du circuit de décodage cda (figures 1 et 4) fournisse, comme il se doit, un signal d'appel ; ce circuit est très simple et la probabilité qu'il soit défectueux est très faible. Elle peut transmettre des cellules directement sur le bus BS vers les circuits de réception, quand le trafic le demande (cellule vide), ou le permet (cellule de service non prioritaire), ou quelles que soient les circonstances (cellule prioritaire). Ces dispositions offrent ainsi une grande sécurité quant aux possibilités de transmission qui sont offertes à l'unité de gestion.

Par ailleurs, on a vu que des cellules vides sont toujours présentes dans les flux de données commutées. Comme une telle unité de gestion est associée à chaque élément de commutation, les unités de gestion de tout un réseau de commutation sont ainsi dotées, en quelque sorte, d'une capacité de transmission propre leur permettant d'échanger des volumes d'information significatifs, sans que cela affecte la capacité de transmission disponible pour les communications. Cela peut ainsi permettre d'envisager un système de commande de réseau décentralisé, dont une partie au moins serait partagée entre les unités de gestion. Dans cette optique, les unités de gestion pourraient recevoir davantage d'informations des éléments de commutation qu'il en a été décrit. Pour donner un exemple, les FIFO de sortie pourraient individuellement fournir une indication de leur état de remplissage, permettant à l'unité de gestion d'évaluer l'état de charge de chaque liaison de sortie associée. Toute communication à travers un réseau de commutation composé de tels éléments de commutation pourait alors débuter par la transmission d'une cellule de service retransmise d'unité de gestion en unité de gestion et permettant de vérifier que la nouvelle communication ne causerait pas d'engorgement, où que ce soit dans le réseau.

Il est bien évident que les descriptions qui précèdent n'ont été données qu'à titre d'exemple non limitatif et que de nombreuses variantes peuvent être envisagées sans sortir pour autant du cadre de l'invention.

## Revendications

1. Unité de gestion pour un élément de commutation de données transmises par multiplexage temporel asynchrone comprenant des circuits de réception associés chacun à une liaison d'entrée et fournissant sur un bus d'entrée des cellules reçues par cette liaison d'entrée, des circuits d'émission associés chacun à une liaison de sortie et envoyant des cellules sur cette liaison de sortie, qui lui sont fournies par un bus de sortie, ainsi qu'un système de mémoire tampon transférant des cellules, sélectivement, des circuits de réception aux circuits d'émission et connecté à cette fin entre les bus d'entrée et de sortie, cette unité de gestion étant caractérisée en ce qu'elle comprend des moyens d'entrée (gme, gpe) agencés pour recevoir des cellules présentes sur le bus d'entrée (BE) de l'élément de commutation et des moyens de sortie (grs, grv) agencés pour fournir des cellules sur le bus de sortie (BS) de l'élément de commutation et cela, dans les deux cas, sur commande du système de mémoire tampon (SMT).

2. Unité de gestion conforme à la revendication 1, caractérisée en ce que lesdits moyens d'entrée comprennent un circuit d'appel (gpe) décelant un signal d'appel (adl) venant du système de mémoire tampon (SMT) et une mémoire d'entrée (gme), le circuit d'appel commandant l'écriture de la cellule présente sur le bus d'entrée (BE) de l'élément de commutation, dans la mémoire d'entrée (gme) de l'unité de gestion, lorsqu'il reçoit ledit signal d'appel (adl).

3. Unité de gestion conforme à la revendication 2, caractérisée en ce que ladite mémoire d'entrée est une FIFO capable d'enregistrer plusieurs cellules.

4. Unité de gestion conforme à l'une quelconque des revendications 1 à 3, caractérisée en ce que lesdits moyens de sortie comprennent un circuit d'envoi (gpl) recevant un signal de disponibilité (fv) indiquant l'absence de cellule à transmettre dans ledit système de mémoire tampon (SMT) et un registre de sortie (grs, grv), le circuit d'envoi (gpl) déterminant l'envoi de la cellule que contient le registre de sortie (grs, grv) sur le bus de sortie (BS) de l'élément de commutation, dès qu'il reçoit ledit signal de disponibilité (fv).

5. Unité de gestion conforme à la revendication 4, caractérisée en ce que ledit registre de sortie comprend au moins un registre pour une cellule à émettre (grs) et un registre de cellule vide (grv), la cellule contenue dans le registre de cellule vide (grv) étant transmise sur le bus de sortie (BS) de l'élément de commutation, toutes les fois qu'il n'y a pas de cellule à envoyer dans le registre de cellule à émettre (grs).

6. Unité de gestion conforme à la revendication 5, caractérisée en ce qu'elle comprend également un circuit de forçage (gbf) fournissant un signal (fc) ayant le même effet que ledit signal (fv) indiquant l'absence de cellule à retransmettre dans l'élément de commutation et en ce que ledit circuit d'envoi (gpl) fournit également un signal de forçage (fcv) ayant le même effet, dans l'élément de commutation, que ledit signal (fv) indiquant l'absence de cellule à retransmettre.

7. Unité de gestion conforme à l'une quelconque des revendications qui précèdent, caractérisée en ce qu'elle comprend en outre des moyens d'accès (CM), en écriture et lecture, à une mémoire de circuits virtuels dudit système de mémoire tampon (SMT).

**Claims**

1. Management unit for a unit for switching data transmitted by asynchronous time-division multiplexing comprising receive circuits each associated with an input link and supplying on an input bus cells received via said input link, transmit circuits each associated with an output link and sending cells on said output link which are supplied to it by an output bus and a buffer memory transferring cells selectively from the receive circuits to the transmit circuits and to this end connected between the input and output buses, said management unit being characterized in that it comprises input means (gme, gpe) arranged to receive cells present on the input bus (BE) of the switching unit and output means (grs, grv) adapted to supply cells on the output bus (BS) of the switching unit, in both cases under the control of the buffer memory system (SMT).

2. Management unit according to claim 1 characterized in that said input means comprise a call circuit (gpe) detecting a call signal (adl) from the buffer memory system (SMT) and an input memory (gme), the call circuit commanding writing of the cell present on the input bus (BE) of the switching unit into the input memory (gme) of the management unit when it receives said call signal (adl).

3. Management unit according to claim 2 characterized in that said input memory is an FIFO memory capable of storing a plurality of cells.

4. Management unit according to any one of claims 1 through 3 characterized in that said output means comprise a transmit circuit (gpl) receiving an availability signal (fv) indicating the absence of any cell to transmit in said buffer memory system (SMT) and an output register (grs, grv), the transmit circuit (gpl) determining transmission of the cell that the output register (grs, grv) contains on the output bus (BS) of the switching unit immediately it receives said availability signal (fv).

5. Management unit according to claim 4 characterized in that said output register comprises at least one register (grs) for a cell to be transmitted and an empty cell register (grv), the cell contained in the empty cell register (grv) being transmitted on the output bus (BS) of the switching unit whenever there is no cell to be transmitted in the register (grs) for cells to transmit.

6. Management unit according to claim 5 characterized in that it further comprises a forcing circuit (gbf) supplying a signal (fc) having the same effect as said signal (fv) indicating the absence of any cell to be retransmitted in the switching unit and in that said transmit circuit (gpl) also supplies a forcing signal (fcv) having the same effect in the switching unit as said signal (fv) indicating the absence of any cell to be retransmitted.

7. Management unit according to any one of the preceding claims characterized in that it further comprises write and read mode access means (CM) to a virtual circuit memory of said buffer memory system (SMT).

## Patentansprüche

1. Verwaltungseinheit für ein Datenschaltelement vom asynchronen Zeitmultiplextyp, mit Empfangsschaltungen, die je einer Eingangsverbindung zugeordnet sind und über einen Eingangsbus Datenblöcke liefern, die über diese Eingangsverbindung empfangen wurden, mit Sendeschaltungen, die je einer Ausgangsverbindung zugeordnet sind und Datenblöcke über diese Ausgangsverbindung übermitteln, die ihr von einem Ausgangsbus geliefert werden, und mit einem Pufferspeichersystem, das Datenblöcke selektiv von den Empfangsschaltungen zu den Sendeschaltungen überträgt und hierzu zwischen den Eingangs- und den Ausgangsbus geschaltet ist, dadurch gekennzeichnet, daß die Einheit Eingangsmittel (gme, gpe), die zum Empfangen von Datenblöcken ausgelegt sind, welche auf dem Eingangsbus (BE) des Schaltelements auftreten, und Ausgangsmittel (grs, grv) aufweist, die zum Liefern von Datenblöcken an den Ausgangsbus (BS) des Schaltelements ausgelegt sind, und dies in beiden Fällen auf Befehl des Pufferspeichersystems (SMT).

2. Verwaltungseinheit nach Anspruch 1, dadurch gekennzeichnet, daß die Eingangsmittel eine Rufschaltung (gpe), die ein vom Pufferspeichersystem (SMT) kommendes Rufsignal (adl) identifiziert, und einen Eingangsspeicher (gme) aufweist, wobei die Rufschaltung das Einschreiben des auf den Eingangsbus (BE) des Schaltelements vorhandenen Datenblocks in den Eingangsspeicher (gme) der Verwaltungseinheit steuert, wenn sie das Rufsignal (adl) empfängt.

3. Verwaltungseinheit nach Anspruch 2, dadurch gekennzeichnet, daß der Eingangsspeicher ein FIFO ist, der mehrere Datenblöcke speichern kann.

4. Verwaltungseinheit nach einem beliebigen der Ansprüche 1 bis 3, dadurch gekennzeichnet, daß die Ausgangsmittel eine Übermittlungsschaltung (gpl), die ein Bereitschaftssignal (fv) empfängt, das das Fehlen eines zu übertragenden Datenblocks im Pufferspeichersystem (SMT) anzeigt, und ein Ausgangsregister (grs, grv) aufweisen, wobei die Übermittlungsschaltung (gpl) die Übermittlung des Datenblocks, den das Ausgangsregister (grs, grv) enthält, über den Ausgangsbus (BS) des Schaltelements bestimmt, sobald sie das Bereitschaftssignal (fv) empfängt.

5. Verwaltungseinheit nach Anspruch 4, dadurch gekennzeichnet, daß das Ausgangsregister mindestens ein Register für einen zu senden Datenblock (grs) und ein Register für einen leeren Datenblock (grv) aufweist, wobei der im Register für einen leeren Datenblock (grv) enthaltene Datenblock über den Ausgangsbus (BS) des Schaltelements jedesmal dann übertragen wird, wenn im Register für zu sendende Datenblöcke (grs) kein Datenblock vorhanden ist.

6. Verwaltungseinheit nach Anspruch 5, dadurch gekennzeichnet, daß sie weiter eine Zwangsschaltung (gbf) aufweist, die ein Signal (fc) liefert, das die gleiche Wirkung wie das genannte Signal (fv) hat, welches das Fehlen eines in das Schaltelement zu übertragenden Datenblocks anzeigt, und daß die Übermittlungsschaltung (gpl) auch ein Zwangssignal (fcv) in das Schaltelement liefert, das die gleiche Wirkung hat wie das das Fehlen eines weiterzuübertragenden Datenblocks anzeigende Signal (fv) besitzt.

7. Verwaltungseinheit nach einem beliebigen der vorhergehenden Ansprüche, dadurch gekennzeichnet, daß sie weiter Mittel (CM) für den Schreib- und Lesezugang zu einem Speicher für virtuelle Schaltungen des Pufferspeichersystems (SMT) aufweist.

FIG. 1

EP 0 317 931 B1

# FIG.2

| CD | CV | AD4 | AD3 | AD2 | AD1 |
|---|---|---|---|---|---|

EE

# FIG.3

FIG. 4

FIG.5